# FASCICULE DE BREVET EUROPEEN

(11) **EP 0 782 031 B1**
(45) Date de publication et mention de la délivrance du brevet: **30.06.2004**
(21) Numéro de dépôt: 96402916.9
(22) Date de dépôt: 27.12.1996
(51) Int. Cl.: G02C 7/04

(54) **Lentille oculaire artificielle multifocale à transparence variable avec l'éclairement**
Multifokale, künstliche Augenlinse mit lichtstärkeabhängiger variabler Durchlässigkeit
Multifocal artificial ocular lens with variable light transmission depending on luminous intensity

(30) Priorité: 29.12.1995 FR 9515756
(43) Date de publication de la demande: 02.07.1997
(73) Titulaire: ESSILOR INTERNATIONAL (Compagnie Générale d'Optique), F-94220 Charenton-le-Pont (FR)
(72) Inventeur: Chateau, Nicolas, 75012 Paris (FR); Grollier, Corinne, 94000 Creteil (FR); Baude, Dominique, 93400 Saint Ouen (FR)
(74) Mandataire: Santarelli

(56) Documents cités:
- EP-A- 0 227 337
- EP-A- 0 245 020
- WO-A-86/01996
- WO-A-95/08135
- US-A- 3 507 552
- US-A- 4 681 412
- US-A- 5 108 427
- US-E- R E33 477

## Description

La présente invention concerne d'une manière générale les lentilles oculaires artificielles multifocales, qu'il s'agisse de lentilles oculaires artificielles en matériau rigide ou qu'il s'agisse de lentilles oculaires artificielles en matériau souple.

Par lentilles oculaires artificielles, on entend ici aussi bien les lentilles de contact que les implants intraoculaires ou que les lentilles intracornéennes

Ainsi qu'on le sait, les lentilles de contact multifocales comportent au moins deux zones correctrices, à savoir une zone de vision de près, plus particulièrement adaptée à la correction de la vision de près et une zone de vision de loin, plus particulièrement adaptée à une correction de la vision de loin.

Par exemple, une telle lentille de contact multifocale comporte deux zones correctrices concentriques disposées de façon telle que la zone de vision de près est située au centre de la lentille tandis que la zone de vision de loin est située à sa périphérie, auquel cas la lentille est communément dite à "VP centrale".

En variante, la zone de vision de loin est située au centre et la zone de vision de près est située à la périphérie, auquel cas la lentille est communément dite à "VL centrale".

Ainsi qu'on le sait, également, les performances visuelles de la plupart des lentilles de contact multifocales de ce type dépendent fortement du diamètre pupillaire de leur porteur.

Or la pupille de l'oeil réagit, naturellement, d'elle-même, par simple réflexe, à deux types de stimulation : son diamètre diminue quand la distance de l'objet observé diminue, et/ou quand la luminance de cet objet augmente.

Les variations de diamètre pupillaire liées à la distance de l'objet observé peuvent être mises à profit par une optique multifocale adaptée, et, en pratique, elles interviennent dans le bon sens avec les lentilles à VP centrale.

En effet, avec ces lentilles, la constriction pupillaire qui accompagne la vision de près conduit automatiquement à une sélection au moins partielle de la zone correctrice utile, et il en est de même de la dilatation pupillaire qui accompagne la vision de loin.

Dans les deux cas, il résulte de la réaction de la pupille à la distance d'observation une amélioration des contrastes pour l'image obtenue sur la rétine.

En revanche, les variations de diamètre pupillaire liées à la luminance, et, donc, en pratique, au niveau d'éclairage de l'objet observé, ont des effets indésirables.

Par exemple, avec une lentille à VP centrale, une forte luminance provoque une constriction pupillaire, qui, par la sélection qui en résulte pour la zone correctrice utile, favorise la correction de la vision de près au détriment de celle de la vision de loin, même si l'objet observé se trouve à grande distance.

De la même façon, avec une lentille à VL centrale, une forte luminance favorise la correction de la vision de loin au détriment de celle de la vision de près même si l'objet observé se trouve à faible distance, comme cela peut être par exemple très simplement le cas pour une lecture dans une ambiance bien éclairée.

Dans l'un et l'autre cas, le passage d'une faible luminance à une forte luminance nuit donc à la stabilité des performances visuelles, ou, plus généralement, à la qualité des performances optiques, au détriment du confort visuel du porteur.

La présente invention a d'une manière générale pour objet une disposition permettant de minimiser, sinon d'annuler, cet inconvénient.

De manière plus précise, elle a pour objet une lentille oculaire artificielle multifocale, et, par exemple, une lentille de contact, du genre comportant au moins deux zones correctrices, à savoir une zone de vision de près plus particulièrement adaptée à une correction de la vision de près et une zone de vision de loin plus particulièrement adaptée à la correction de vision de loin, lesdites zones correctrices étant au moins partiellement sélectionnables en fonction du diamètre pupillaire, caractérisée en ce que sa transparence varie suivant une fonction décroissante de l'éclairement dont elle est l'objet pour limiter la constriction pupillaire réflexe suscitée par une forte luminance, et donc pour limiter la perturbation de sélection des zones correctrices provoquée par cette constriction pupillaire réflexe.

En pratique, cette lentille oculaire artificielle multifocale est en un matériau dont la transparence diminue lorsque son éclairement augmente.

Il s'agit par exemple d'un polymère, ou d'un copolymère, auquel est incorporé un composé photochromique.

En pratique, et ainsi que les essais le confirment, une variation de 80 % du coefficient de transmission de la lumière entre un éclairement faible et un éclairement élevé suffit largement à l'effet recherché.

Certes, il est déjà connu d'incorporer un composé photochromique au matériau constitutif d'un verre de lunettes, voire même à celui d'une portion d'une lentille de contact (brevet américain 4,681,412).

Mais, à ce jour, le seul effet recherché est l'obtention d'une protection efficace et pratique de l'oeil contre l'éblouissement.

S'agissant, ici, d'une lentille oculaire artificielle multifocale, s'ajoute, avantageusement, à cet effet, suivant l'invention, une amélioration des performances optiques.

Les caractéristiques et avantages de l'invention ressortiront d'ailleurs de la description qui va suivre, à titre d'exemple, en référence aux dessins schématiques annexés sur lesquels :
la figure 1 est une vue en coupe axiale d'une lentille oculaire artificielle multifocale suivant l'invention ;
la figure 2 est un diagramme illustrant les effets de la luminance sur le diamètre pupillaire des individus, en vision de loin ;
la figure 3 est un diagramme analogue à celui de la figure 2, en vision de près ;
les figures 4A, 4B, 5A et 5B sont des diagrammes permettant d'illustrer les performances optiques obtenues avec diverses lentilles oculaires artificielles.

Ces figures illustrent, à titre d'exemple, l'application de l'invention à une lentille de contact multifocale 10 comportant, de manière connue en soi, au moins deux zones correctrices, à savoir une zone de vision de près Z_{VP} plus particulièrement adaptée à une correction de la vision de près et une zone de vision de loin Z_{VL} plus particulièrement adaptée à la correction de la vision de loin.

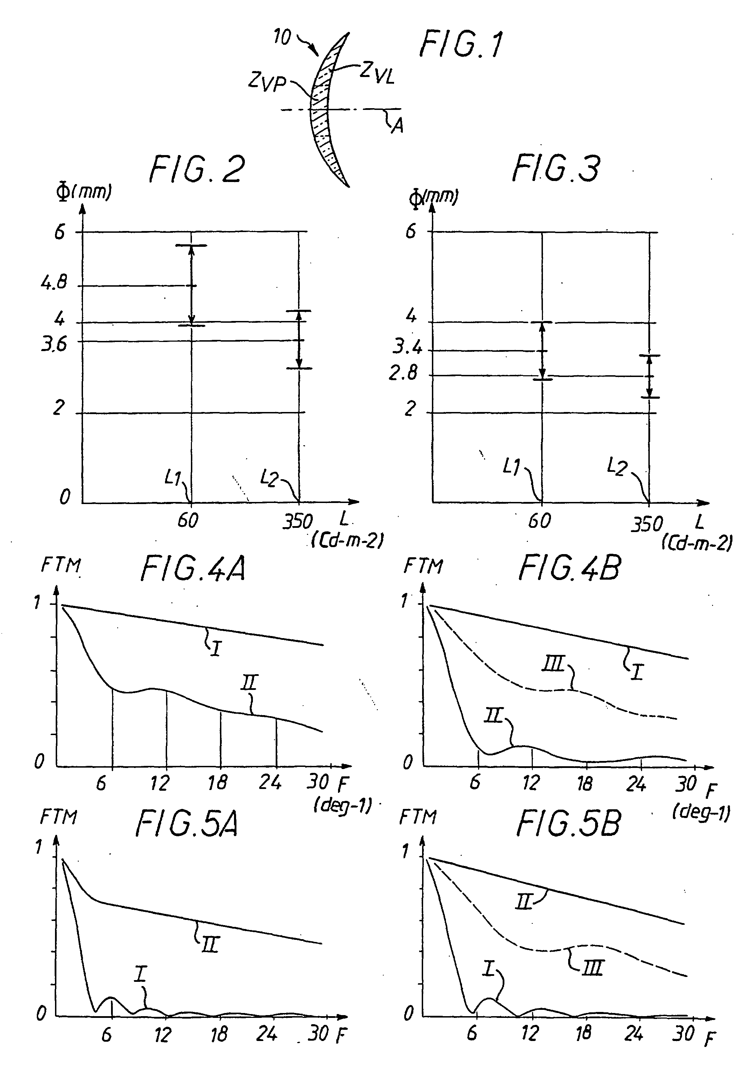

En pratique, dans la forme de réalisation représentée, seules sont prévues cette zone de vision de près Z_{VP} et cette zone de vision de loin Z_{VL}, et il s'agit de zones concentriques qui s'étendent annulairement autour de l'axe optique A de la lentille de contact multifocale 10 suivant l'invention, tel que schématisé à la figure 1.

Dans la forme de réalisation représentée, la lentille de contact multifocale 10 suivant l'invention est une lentille de contact à VP centrale, c'est-à-dire une lentille de contact dans laquelle la zone de vision de près Z_{VP} est située au centre tandis que la zone de vision de loin Z_{VL} est située à la périphérie.

Suivant l'invention, la transparence de cette lentille de contact multifocale 10 varie suivant une fonction décroissante de l'éclairement dont elle est l'objet.

Plus précisément, cette lentille de contact multifocale 10 est en un matériau, rigide ou souple, dont la transparence diminue lorsque son éclairement augmente.

Il s'agit, en pratique, d'un polymère, ou d'un copolymère, auquel est incorporé un composé photochromique.

Il en résulte, suivant l'invention, une amélioration des performances optiques, en sus de la protection usuelle contre l'éblouissement.

Cette amélioration des performances optiques ressortira plus clairement de ce qui suit, à la lumière des diagrammes des figures 2, 3, 4A, 4B, 5A et 5B.

Sur les figures 2 et 3, on a reporté, en abscisses, la luminance L de l'objet observé, et, en ordonnées, les valeurs de diamètre pupillaire Φ relevées sur un groupe de sujets presbytes pour deux valeurs données L₁, L₂ de la luminance L.

En pratique, la valeur L₁ est supposée être de l'ordre de 60 cd/m², ce qui est une valeur de luminance considérée en général comme minimale pour un bon confort de lecture.

Corollairement, la valeur L₂ est supposée être de l'ordre de 350 cd/m², ce qui correspond à un niveau d'éclairage relativement fort mais encore supportable.

Les mesures de diamètre pupillaire Φ ont été réalisées à l'aide d'un vidéopupillomètre, dans les conditions visuelles les plus naturelles possibles pour les sujets concernés.

Sur les figures 2 et 3, seuls ont été retenus, par mesure de simplicité, les moyennes et les écarts types des valeurs mesurées sur le groupe de sujets presbytes observé.

En vision de loin, figure 2, le diamètre pupillaire Φ moyen est de l'ordre de 4,8 mm pour la valeur de luminance L₁ la plus faible, et de l'ordre de 3,6 mm pour la valeur de luminance L₂ la plus forte.

En vision de près, figure 3, ces diamètres pupillaires Φ moyens sont respectivement de l'ordre de 3,4 mm et de 2,8 mm.

Ainsi, on constate bien, comme prévu, que le diamètre pupillaire Φ diminue lorsque la luminance L augmente et/ou lorsque la distance de l'objet observé diminue.

Sur les diagrammes des figures 4A, 4B, 5A et 5B, on a reporté, en abscisses, la fréquence spatiale F, et, en ordonnées, la fonction de transfert de modulation FTM calculée pour une longueur d'onde donnée, de 550 nm.

La fréquence spatiale F traduit, de façon connue, la finesse des détails observés.

Sur les diagrammes des figures 4A, 4B, 5A et 5B, elle varie de 0 à 30.

Elle est donnée en nombre de cycles par degré.

En optique visuelle, une fréquence spatiale de 6 cycles par degré est usuellement considérée comme moyenne et une fréquence spatiale supérieure à 10 cycles par degré comme élevée.

Corollairement, la fonction de transfert de modulation FTM constitue un critère de qualité pour apprécier les performances optiques.

Elle traduit la capacité de la lentille de contact à reproduire le contraste de détails de différentes finesses, c'est-à-dire de différentes fréquences spatiales F.

En pratique, cette fonction de transfert de modulation FTM prend des valeurs comprises entre 0 et 1.

Les diagrammes des figures 4A et 4B correspondent à une vision de loin, le diagramme de la figure 4A pour la valeur de luminance L₁ la plus faible, et, donc, pour un diamètre pupillaire Φ de l'ordre de 4,8 mm, et le diagramme de la figure 4B pour la valeur de luminance L₂ la plus élevée, et, donc, pour un diamètre pupillaire Φ de l'ordre de 3,6 mm.

Les diagrammes des figures 5A et 5B correspondent à une vision de près, pour les mêmes valeurs de luminance L₁, L₂.

Le diagramme de la figure 5A correspond donc à un diamètre pupillaire Φ de l'ordre de 3,4 mm, tandis que celui de la figure 5B correspond à un diamètre pupillaire Φ de l'ordre de 2,8 mm.

Sur les figures 4A et 4B, les courbes I se rapportent à une lentille monofocale idéale, c'est-à-dire à une lentille monofocale procurant la meilleure correction possible de la vision de loin.

Ainsi qu'on le notera, la fonction de transfert de modulation FTM varie peu, et l'influence du diamètre pupillaire **Φ** est très faible, les performances optiques étant sensiblement les mêmes pour la valeur de luminance L₁ la plus faible que pour la valeur de luminance L₂ la plus élevée.

Les courbes II se rapportent, elles, à une lentille bifocale à VP centrale ordinaire, dont la zone de vision de près Z_{VP}, située au centre, a un diamètre de 3 mm et assure une addition de 1,5 dioptrie.

Ainsi qu'on le notera, les performances optiques sont assez sensiblement dégradées pour la valeur de luminance L₂ la plus élevée, figures 4B, par rapport à ce qu'elles sont pour la valeur de luminance L₁ la plus faible, figure 4A.

Sur les figures 5A et 5B, qui correspondent à une vision de près, les courbes I se rapportent, comme précédemment, à une lentille monofocale idéale, et, ainsi qu'on le notera, la fonction de transfert de modulation FTM prend alors des valeurs très faibles dans le domaine des moyennes et hautes fréquences spatiales (à partir de 5 cycles par degré), en conduisant donc à de très mauvaises performances optiques.

Comme précédemment, également, les courbes II se rapportent à une lentille bifocale à VP centrale ordinaire, et, ainsi qu'on le notera, l'influence du diamètre pupillaire Φ est alors plus importante qu'elle ne l'était en vision de loin, les performances optiques se trouvant légèrement dégradées pour la valeur de luminance L₁ la plus faible par rapport à ce qu'elles sont pour la valeur de luminance L₂ la plus élevée.

Mais, ainsi qu'on le notera également, les performances optiques en vision de près sont améliorées par rapport à la lentille monofocale idéale, aussi bien pour la valeur de luminance L₁ la plus faible que pour la valeur de luminance L₂ la plus élevée.

Conjointement, pour la valeur de luminance L₁ la plus faible, figures 4A et 5A, les performances optiques de la lentille bifocale ordinaire restent sensiblement du même ordre en vision de loin, figure 4A, et en vision de près, figure 5A.

Il y a donc, dans ce cas, un équilibre favorable entre ces performances optiques en vision de loin et en vision de près.

Il n'en est pas de même pour la valeur de luminance L₂ la plus élevée, pour laquelle, au contraire, figures 4B et 5B, cet équilibre est rompu.

En effet, on observe alors que si, en vision de près, figure 5B, les performances optiques restent bonnes, elles se trouvent dégradées en vision de loin, figure 4B.

Sur les figures 4B et 5B, les courbes III donnent les performances optiques obtenues avec une lentille multifocale 10 suivant l'invention, c'est-à-dire avec une lentille multifocale 10 dont la transparence varie suivant une fonction décroissante de l'éclairement.

On constate, dans ce cas, un retour à un équilibre favorable entre les performances optiques en vision de loin, figure 4B, et celles en vision de près, figure 5B.

La dégradation des performances en vision de loin est, quant à elle, évitée.

En pratique, de bons résultats ont été obtenus avec une variation de 80 % du coefficient de transmission de la lumière entre la valeur de luminance L₁ la plus faible et la valeur de luminance L₂ la plus élevée.

De bons résultats ont notamment été obtenus en choisissant pour composé photochromique une spiro-oxazine répondant à la formule générale suivante :

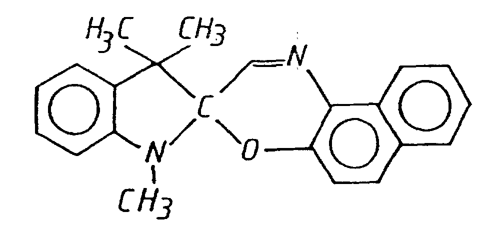

Il peut s'agir, par exemple, de la 5-acryloxy-6'-cyano-1,3,3-triméthyl-spiro-[indoline-2,3'-[3H]-naphto-[2,1-b]-[1,4]-oxazine] répondant plus précisément à la formule générale suivante :

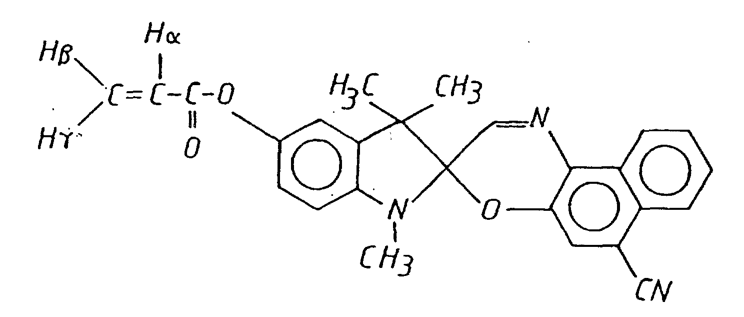

Mais il peut s'agir également de la 6'-cyano-1,3-diméthyl-3-éthyl-spiro-[indoline-2,3'-[3H]-naphto-[2,1-b]-[1,4]-oxazine] répondant plus précisément à la formule générale suivante : 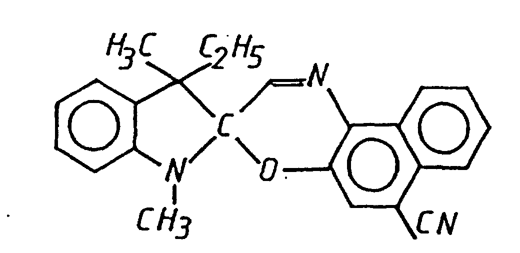 ou de la 5-acryloxy-6'-phénylsulfonyl-1,3,3-triméthyl-spiro-[indoline-2,3'-[3H]-naphto-[2,1-b]-[1,4]-oxazine] répondant plus précisément à la formule générale suivante :

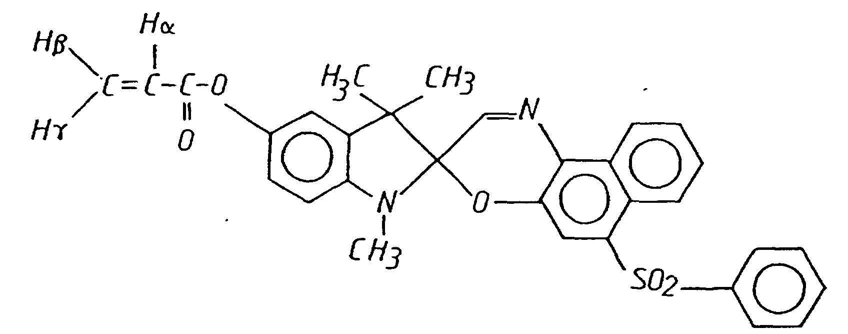

Avantageusement, les proportions molaires du composé photochromique mis en oeuvre peuvent par exemple être comprises entre 0,05 et 0,25 % molaire.

Avantageusement, également, ce composé photochromique est incorporé dans la masse même du polymère ou copolymère constituant le matériau constitutif de la lentille de contact multifocale 10 concernée.

On donnera ci-après à titre d'exemple deux compositions possibles pour le mélange correspondant.

Les proportions relatives y sont rapportées au poids total de l'ensemble.

### Composition 1

- VP =: 72,8 %
- MMA =: 26,1 %
- AM =: 0,23 %
- AIBN =: 0,89 %
- P =: 0,1 % molaire

Dans cette composition :
VP désigne la vinylpyrrolidone
MMA désigne le méthacrylate de méthyl
AM désigne le méthacrylate d'allyle, qui intervient en tant qu'agent réticulant
AIBN désigne l'azobisisobutyronitrile, qui intervient en tant qu'amorceur thermique
P désigne le composé photochromique

### Composition 2 :

- MMA =: 100 %
- DMEG =: 2 %
- AIBN =: 0,03 %
- P =: 0,1 % molaire

Dans cette composition, DMEG désigne le diméthacrylate d'éthylèneglycol.

Pour l'une ou l'autre des deux compositions, le mode opératoire est de type usuel.

Bien entendu, la présente invention ne se limite pas à ces compositions, mais s'étend aussi bien à toute composition pouvant conduire à une transparence variant suivant une fonction décroissante de l'éclairement.

En outre, son domaine d'application ne se limite pas à celui des seules lentilles de contact, mais s'étend au contraire aussi bien à celui d'autres lentilles oculaires artificielles, et, plus précisément, à celui des implants intraoculaires et à celui des lentilles intracornéennes.

## Revendications

1. Lentille oculaire artificielle multifocale, du genre comportant au moins deux zones correctrices, à savoir une zone de vision de près (Z_{VP}) plus particulièrement adaptée à une correction de la vision de près et une zone de vision de loin (Z_{VL}) plus particulièrement adaptée à la correction de vision de loin, lesdites zones correctrices (Z_{VP}, Z_{VL}) étant au moins partiellement sélectionnables en fonction du diamètre pupillaire, **caractérisée en ce que** sa transparence varie suivant une fonction décroissante de l'éclairement dont elle est l'objet pour limiter la constriction pupillaire réflexe suscitée par une forte luminance, et donc pour limiter la perturbation de sélection des zones correctrices (Z_{VP}, Z_{VL}) provoquée par cette constriction pupillaire réflexe.

2. Lentille oculaire artificielle multifocale suivant la revendication 1, **caractérisée en ce qu'**elle est en un matériau dont la transparence diminue lorsque son éclairement augmente.

3. Lentille oculaire artificielle multifocale suivant la revendication 2, **caractérisée en ce** son matériau constitutif est un polymère ou un copolymère auquel est incorporé un composé photochromique.

4. Lentille oculaire artificielle multifocale suivant la revendication 3, **caractérisée en ce** le composé photochromique est une spiro-oxazine.

5. Lentille oculaire artificielle multifocale suivant l'une quelconque des revendications 1 à 4, **caractérisée en ce qu'**elle est en matériau rigide.

6. Lentille oculaire artificielle multifocale suivant l'une quelconque des revendications 1 à 4, **caractérisée en ce qu'**elle est en matériau souple.

## Patentansprüche

1. Künstliche multifokale Okularlinse, vom Typ, umfassend zumindest zwei Korrekturzonen, nämlich eine Nahsichtzone (Z_{VP}), insbesondere angepasst zur Korrektur der Nahsicht und eine Fernsichtzone (Z_{VL}), insbesondere angepasst zur Korrektur der Fernsicht, wobei die Korrekturzonen (Z_{VP}, Z_{VL}) zumindest teilweise wählbar sind in Abhängigkeit des Pupillendurchmessers, **dadurch gekennzeichnet, dass** sich deren Transparenz gemäß einer abnehmenden Funktion der Lichteinwirkung, der sie unterliegt, verändert, um die reflexartige Pupillenverkleinerung zu begrenzen, bewirkt durch eine Lumineszenz und um somit Auswahlstörungen der Korrekturzonen (Z_{VP} Z_{VL}), bedingt durch diese reflexartige Pupillenverkleinerung zu begrenzen.

2. Künstliche multifokale Okularlinse nach Anspruch 1, **dadurch gekennzeichnet, dass** sie aus einem Material gebildet ist, dessen Transparenz abnimmt, wenn deren Lichtbeaufschlagung zunimmt.

3. Künstliche multifokale Okularlinse nach Anspruch 2, **dadurch gekennzeichnet, dass** das sie bildende Material ein Polymer oder ein Copolymer ist, in die eine fotochromatische Verbindung eingebracht ist.

4. Künstliche multifokale Okularlinse nach Anspruch 3, **dadurch gekennzeichnet, dass** die fotochromatische Verbindung ein Spirooxazin ist.

5. Künstliche multifokale Okularlinse nach einem der Ansprüche 1 bis 4, **dadurch gekennzeichnet, dass** sie aus einem steifen Material gebildet ist.

6. Künstliche multifokale Okularlinse nach einem der Ansprüche 1 bis 4, **dadurch gekennzeichnet, dass** sie aus einem weichen Material gebildet ist.

## Claims

1. A multifocal artificial ocular lens, of the type having at least two corrective areas, namely a near vision area (Z_{VP}) more particularly adapted to correct near vision and a distance vision area (Z_{VL}) more particularly adapted to correct distance vision, said corrective areas (Z_{VP}, Z_{VL}) being at least partially selectable as a function of the pupillary diameter, **characterized in that** its transparency varies in accordance with a decreasing function of the illumination to which it is subjected to limit the reflex pupillary constriction caused by a high luminance, and thus to limit the disturbance to the selection of the corrective areas (Z_{VP}, Z_{VL}) caused by said reflex pupillary constriction.

2. A multifocal artificial ocular lens according to claim 1, **characterized in that** it is made from a material whose transparency decreases as its illumination increases.

3. A multifocal artificial ocular lens according to claim 2, **characterized in that** it is made from a polymer or a copolymer incorporating a photochromic substance.

4. A multifocal artificial ocular lens according to claim 3, **characterized in that** the photochromic substance is spiro-oxazine.

5. A multifocal artificial ocular lens according to any of claims 1 to 4, **characterized in that** it is made from a rigid material.

6. A multifocal ocular lens according to any of claims 1 to 4, **characterized in that** it is made from a flexible material.
